(19) Europäisches Patentamt

European Patent Office

Office européen des brevets

(11) **EP 0 950 675 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **C08G 18/64**, C08G 18/10, C09D 175/04

(21) Anmeldenummer: **99106759.6**

(22) Anmeldetag: **03.04.1999**

(54) **Reaktivsysteme und ihre Verwendung zur Herstellung von Beschichtungen, Klebstoffen, Dichtungsmassen, Vergussmassen oder Formteilen**

Reactive systems and their use for the production of coatings, adhesives, sealants, castings or mouldings

Systèmes réactifs et leur utilisation pour la production de revêtements, adhésifs, matériaux d'étanchéité, matériaux de coulée ou des pièces moulées

(84) Benannte Vertragsstaaten:
**AT BE CH DE DK ES FI FR GB IT LI LU NL**

(30) Priorität: **15.04.1998 DE 19816570**

(43) Veröffentlichungstag der Anmeldung:
**20.10.1999 Patentblatt 1999/42**

(73) Patentinhaber: **Bayer MaterialScience AG**
**51368 Leverkusen (DE)**

(72) Erfinder:
• **Schmalstieg, Lutz, Dr.**
**50676 Köln (DE)**
• **Schwindt, Volker**
**51373 Leverkusen (DE)**
• **Hassel, Tillmann, Dr.**
**50259 Pulheim (DE)**
• **Ruttmann, Gerhard**
**51399 Burscheid (DE)**

(56) Entgegenhaltungen:
DE-A- 2 152 606        US-A- 3 912 566
US-A- 4 471 106        US-A- 4 482 661
US-A- 5 262 481

**Beschreibung**

Die Erfindung betrifft neuartige Reaktivsysteme auf Basis einer Polyisocyanatkomponente mit blockierten Isocyanatgruppen und einer Reaktivkomponente mit primären Aminogruppen sowie gegebenenfalls einer weiteren Reaktivkomponente mit Oxirangruppen sowie die Verwendung dieser Reaktivsysteme zur Herstellung von Beschichtungen, Klebstoffen, Dichtungsmassen, Vergußmassen oder Formteilen.

Reaktivsysteme auf Basis von blockierten Polyisocyanaten und Polyaminen sind in großer Anzahl bekannt. Die DE-A 16 44 813 beschreibt die Herstellung von Beschichtungsmassen auf Basis von Ketoxim-blockierten Polyisocyanaten und organischen Polyaminen. Diese Systeme härten bei Raumtemperatur extrem langsam aus und benötigen zur Aushärtung in der Regel Temperaturen oberhalb von 120°C. Zum einen ist diese Temperaturbehandlung vielfach nicht möglich und zum anderen neigen die Systeme bei dieser Temperaturbehandlung zur Blasenbildung, so daß sie nur in dünnen Schichten appliziert werden können.

Die DE-A 21 31 299 beschreibt durch Hitzeeinwirkung härtbare Gemische aus einer Polyisocyanatkomponente mit Caprolactam-blockierten Isocyanatgruppen und cycloaliphatischen Polyaminen. Die Systeme dieser Veröffenlichung weisen eine gute Lagerstabilität auf und eignen sich zur Herstellung dickschichtiger Beschichtungen mit einem hohen mechanische Eigenschaftsniveau. Der Nachteil dieser Systeme liegt jedoch in den hohen Reaktionstemperaturen von ca. 160°C, die zur Aushärtung erforderlich sind.

Die DE-A 39 22 767 beschreibt hitzehärtbare Gemische auf Basis von mit sekundären Monoaminen blockierten Polyisocyanaten und organischen Polyaminen. Die Systeme dieser Veröffentlichung zeigen ein gutes Verhältnis von Verarbeitungszeit einerseits und niedriger Aushärtetemperatur andererseits. Problematisch bei den Systemen dieser Veröffentlichung ist aber die Abspaltung des Blockierungsmittels, die zu einer Geruchsbelästigung führt. Außerdem lassen sich die Systeme der DE-A 39 22 767 nicht zur Herstellung Raumtemperatur-härtender Beschichtungen verwenden, da die Härtungsgeschwindigkeit zu gering ist und sich nach bisherigen Erkenntnissen nicht katalytisch beschleunigen läßt.

Die DE-A 21 52 606 beschreibt Reaktivsysteme auf Basis Alkylphenol-blockierter Polyisocyanate und Polyamine, die gegebenfalls auch in Kombination mit Epoxidharzen ausgehärtet werden können. Auch diese Reaktivsysteme sind mit einigen anwendungstechnischen Nachteilen behaftet: Zum einen ist die Reaktivität so hoch, daß in der Regel nur eine Applikation bei Raumtemperatur in Frage kommt, bei relativ kurzen Verarbeitungszeiten. Zum anderen hat das freiwerdende Blockierungsmittel ein vergleichsweise niedriges Molekulargewicht, so daß es mit der Zeit aus der Beschichtung ausdünstet, was zu Haftungsproblemen führen kann und das Niveau der mechanischen Eigenschaften ungünstig beeinflussen kann.

Es war daher die der Erfindung zugrundeliegende Aufgabe, Reaktivsysteme auf Basis von blockierten Polyisocyanaten und Polyaminen zur Verfügung zu stellen, die nicht mit den Nachteilen der Systeme des Standes der Technik behaftet sind.

Gegenstand der Erfindung sind Reaktivsysteme bestehend aus

A) einer Polyisocyanatkomponente, bestehend aus mindestens einem organischen Polyisocyanat mit reversibel blockierten Isocyanatgruppen,

B) mindestens einem organischen Polyamin mit mindestens zwei primären Aminogruppen,

sowie gegebenenfalls

C) Oxirangruppen aufweisenen Verbindungen,

dadurch gekennzeichnet, daß die Komponente A) aus mindestens einem Polyisocyanat des Molekulargewichtsbereichs (ohne Einbeziehung des Blockierungsmittels) 168 bis 25 000 besteht, dessen Isocyanatgruppen durch Reaktion mit mindestens einem phenolische OH-Gruppen aufweisenden Kohlenwasserstoffharz reversibel blockiert sind.

Gegenstand der Erfindung ist auch die Verwendung dieser Reaktivsysteme, gegebenenfalls in Kombination mit den in der Kunststoff- und Beschichtungstechnologie üblichen Katalysatoren, Hilfs- und Zusatzstoffen zur Herstellung von Beschichtungen, Klebstoffen, Dichtungsmassen, Vergußmassen oder Formteilen.

Der Erfindung liegt die überraschende Beobachtung zugrunde, daß die erfindungsgemäßen blockierten Polyisocyanate im Vergleich zu Alkylphenol-blockierten Polyisocyanaten des Standes der Technik eine deutlich verminderte Reaktivität gegenüber Polyaminen aufweisen.

Die Herstellung der erfindungsgemäß als Komponente A) geeigneten Polyisocyanate mit reversibel blockierten Isocyanatgruppen erfolgt durch Umsetzung von organischen Polyisocyanaten der nachstehend genannten Art bei Temperaturen von 40°C bis 150°C, vorzugsweise bei 50°C bis 100°C mit nachstehend näher charakterisierten phenolische OH-Gruppen aufweisenden Kohlenwasserstoffharzen. Die Menge des bei der Blockierungsreaktion eingesetzten, phenolische OH-Gruppen aufweisenden Kohlenwasserstoffharzes sollte zumindest der Menge der zu blockierenden NCO-Gruppen äquivalent sein. Oftmals ist ein geringer Überschuß an Blockierungsmittel zweckmäßig, um eine vollständige Reaktion aller Isocyanatgruppen zu gewährleisten. In der Regel beträgt der Überschuß nicht mehr als 20 Mol-%, vorzugsweise nicht mehr als 15 Mol-% und besonders bevorzugt nicht mehr als 10 Mol-%, bezogen auf die zu blockierenden Isocyanatgruppen.

Die Blockierungsreaktion wird vorzugsweise unter Mitverwendung von aus der Polyurethanchemie an sich bekannten Katalysatoren, wie beispielsweise matallorganischen Verbindungen wie Zinn(II) octoat, Dibutylzinn (II) diacetat, Dibutylzinn(II) dilaurat oder tertiären Aminen wie Triethylamin oder Diazabicyclooctan durchgeführt. Die Blockierungsreaktion kann gegebenfalls in Anwesenheit inerter Lösungsmittel wie beispielsweise Lacklösungsmitteln der nachstehend beispielhaft genannten Art durchgeführt werden.

Zur Herstellung der blockierten Polyisocyanate A) geeignete Ausgangspolyisocyanate sind beliebige organische Polyisocyanate oder Polyisocyanatgemische mit einem (mittleren), aus Isocyanatgehalt und Funktionalität bestimmten Molekulargewicht von 168 bis 25 000, vorzugsweise 1 000 bis 12 000. Geeignete Ausgangspolyisocyanate sind die aus der Polyurethanchemie an sich bekannten Isocyanate wie Hexamethylendiisocyanat, Isophorondisocyanat, Dicyclohexylmethandiisocyanat, die isomeren Diphenylmethandiisocyanate sowie deren höheren Homologen wie sie durch Phosgenierung von Anilin/Formaldehyd-Kondensationsprodukten entstehen, 2,4-, und 2,6-Toluylendiisocyanat sowie deren technische Gemische. Ebenfalls geeignet sind die an sich bekannten Folgeprodukte der gennannten Isocyanate mit Biuret-, Isocyanurat,- Uretdion- und/oder Urethanstruktur.

Vorzugsweise handelt es sich bei den Ausgangspolyisocyanaten um Isocyanatgruppen aufweisende Prepolymere, wie sie durch Umsetzung von nieder- oder höhermolekularen Polyhydroxylverbindungen mit überschüssigen Mengen der vorstehend genannten Di- oder Polyisocyanate oder auch mit einem großen Überschuß der genannten Di- und Polyisocyanate und anschließende Entfernung des überschüssigen Polyisocyanates z.B. durch Dünnschichtdestillation erhalten werden können. Die Herstellung der Prepolymeren erfolgt im allgemeinen bei 40 bis 140°C, gegebenfalls unter Mitverwendung geeigneter Katalysatoren der vorstehend bereits genannten Art.

Zur Herstellung derartiger Prepolymerer eignen sich niedermolekulare Polyhydroxylverbindungen des Molekulargewichtsbereichs 62 bis 299 wie beispielsweise Ethylenglykol, Propylenglykol-1,3- und Butandiol-1,4, Hexandiol-1,6, Neopentylglykol, 2-Ethylhexandiol-1,3, Glycerin, Trimethylolpropan, Pentaerythrit, niedermolekulare Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Vorzugsweise werden jedoch zur Herstellung der Prepolymeren höhermolekulare Polyhydroxylverbindungen des Molekulargewichtsbereichs 300 bis 20 000, vorzugsweise 1 000 bis 8 000, der aus der Polyurethanchemie an sich bekannten Art eingesetzt. Höhermolekulare Polyhydroxylverbindungen zur Herstellung der Prepolymeren sind beispielsweise die den gemachten Angaben entsprechenden Polyesterpolyole auf Basis von niedermolekularen einfachen Alkoholen der bereits beispielhaft genannten Art und mehrbasischen Carbonsäuren wie beispielsweise Adipinsäure, Sebacinsäure, Phtalsäure, Isophtalsäure, Tetrahydrophtalsäure, Hexahydrophtalsäure, Maleinsäure, den Anhydriden derartiger Säuren oder beliebigen Gemischen derartiger Säuren bzw. Anhydriden. Auch die obigen Angaben entsprechenden Hydroxylgruppen-aufweisende Polylactone, insbesondere Poly-$\varepsilon$-caprolactone sind zur Herstellung der Prepolymeren bzw. Semiprepolymeren geeignet.

Zur Herstellung der Isocyanatgruppen aufweisenden Prepolymeren ebenfalls gut geeignet sind die den obigen Ausführungen entsprechenden Polyetherpolyole, wie sie in an sich bekannter Weise durch Alkoxylierung von geeigneten Startermolekülen zugänglich sind.

Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Auch die den oben gemachten Angaben entsprechenden Polytetramethylenglykolpolyether wie sie in bekannter Weise durch kationische Polymerisation von Tetrahydrofuran zugänglich sind, sind gut zur Herstellung der Prepolymeren geeignet.

Zur Herstellung der Prepolymeren ferner geeignet sind die den obigen Ausführungen entsprechenden, Hydroxylgruppen-aufweisenden Polycarbonate, wie sie beispielsweise durch Umsetzung von einfachen Diolen der obengenannten Art mit Diarylcarbonaten, wie beispielsweise Diphenylcarbonat oder Phosgen hergestellt werden können.

Geeignet zur Herstellung der NCO-Gruppen aufweisenden Prepolymere sind ferner Polythioetherpolyole, wie sie z.B. durch Polykondensätion des Thiodiglykols mit sich selbst oder mit Diolen und/oder Polyolen der genannten Art erhalten werden können.

Ferner eignen sich Polyacetale, wie z.B. Polykondensationsprodukte aus Formaldehyd und Diolen bzw. Polyolen der genannrten Art, wie sie unter Verwendung von sauren Katalysatoren wie Phosphorsäure oder p-Toluolsulfonsäure erhalten werden können.

Selbstverständlich können auch Gemische der beispielhaft genannten Hydroxylverbindungen zur Herstellung der Prepolymeren eingesetzt werden.

Besonders bevorzugt werden zur Herstellung der Prepolymeren aromatische Polyisocyanate der vorstehend genannten Art eingesetzt, wegen der höheren Reaktivität der daraus hergestellten blockierten Polyisocyanate A).

Zur Herstellung der erfindungsgemäß als Komponente A) eingesetzten blockierten Polyisocyanate geeignete phenolische OH-Gruppen aufweisende Kohlenwasserstoffharze sind solche der allgemein bekannten Art wie sie beispielhaft beschrieben werden in Ullmanns Encyklopädie der technischen Chemie, 4. Auflage, Bd. 12, Seite 539 bis 545, (Verlag Chemie, Weinheim 1976), Kirk-Othmer, Encyclopedia of Chemical Technology, 3. Auflage, Bd. 12, Seite 852 bis 869, (John Wiley & Sons, New York 1980) oder Encyclopedia of Polymer Science and Engineering, Bd 7, Seite 758 bis 782, (John Wiley & Sons, New York 1987).

Beispiele für geeignete phenolische OH-Gruppen aufweisende Kohlenwasserstoffharze sind Cumaron-Inden-Harze, Petroleumharze oder Terpenharze und ähnliche.

Derartige phenolische OH-Gruppen aufweisende Kohlenwasserstoffharze werden typischerweise hergestellt durch Copolymerisation von ungesättigten Kohlenwasserstoffen der nachstehend genannten Art mit Phenol oder substituierten Phenolen in Gegenwart von starken Säuren oder Katalysatoren vom Friedel-Crafts-Typ. Geeignete ungesättigte Kohlenwasserstoffe zur Herstellung der erfindungsgemäß einsetzbaren OH-funktionellen Kohlenwasserstoffharze sind die bei der Crackung von Naphta oder Gasöl anfallenden Kohlenwasserstoffe wie beispielsweise Buten, Butadien, Penten, Piperylen, Isopren, Cyclopentadien, Styrol, $\alpha$-Methylstyrol, Vinyltoluol, Dicyclopentadien, Methyldicyclopentadien, Inden, Methylinden.

Als ungesättigte Kohlenwasserstoffe, die zur Herstellung der erfindungsgemäß einsetzbaren OH-funktionellen Kohlenwasserstoffharze einsetzbar sind, eignen sich außerdem Terpenharze wie beispielsweise $\alpha$-Pinen, $\beta$-Pinen, Dipenten, D-Limonen oder Terpentin. Bevorzugt einsetzbare Kohlenwasserstoffharze weisen ein Hydroxylgruppengehalt (berechnet als OH, Molekulargewicht 17) von 1,0 bis 6,0 Gew.-% auf. Besonders bevorzugt werden bei Raumtemperatur flüssige Kohlenwasserstoffharze mit einem Hydroxylgruppengehalt von 1,5 bis 4,0 Gew.-% zur Herstellung der Komponente A) eingesetzt.

Zur Herstellung der erfindungsgemäßen Reaktivsysteme können die blockierten Polyisocyanate A) erforderlichenfalls in üblichen Lacklösemitteln wie beispielsweise Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemischen derartiger Lösungsmittel zum Einsatz gelangen.

Bei der Komponente B) der erfindungsgemäßen Reaktivsysteme handelt es sich um Polyamine, die mindestens zwei primäre Aminogruppen pro Molekül aufweisen und vorzugsweise ein (mittleres) Molekulargewichts $\overline{M}_n$ von 60 bis 500 besitzen. Geeignet sind beispielsweise Ethylendiamin, 1,2- und 1,3- Diaminopropan, 1,4-Diaminobutan, 1,6-Diaminohexan, 2,2,4- und/oder 2,4,4-Trimethylhexamethylendiamin, die isomeren Xylylendiamine oder auch solche Polyamine, die neben mindestens zwei primären Aminogruppen noch sekundäre Aminogruppen aufweisen wie beispielsweise Diethylentriamin oder Triethylentetramin.

Besonders bevorzugt werden Polyamine, insbesondere Diamine, des genannten Molekulargewichtsbereichs eingesetzt, die einen oder mehrere cycloaliphatische Ringe aufweisen. Hierzu gehören beispielsweise 1,4-Diaminocyclohexan, 4,4'-Diamino-dicyclohexylmethan, 1,3-Diaminocyclopentan, 4,4'-Diaminodicyclohexylsulfon, 4,4'-Diaminodicyclohexyl-propan-1,3, 4,4'-Diaminodicyclohexyl-propan-2,2, 3,3'-Dimethyl-4,4'diaminodicyclohexylmethan, 3-Aminomethyl-3,3,5-trimethylcyclohexylamin (Isophorondiamin) oder technisches Bis-aminomethyltricyclodecan, wie es unter der Bezeichnung "TCD-Diamin" von der Firma Hoechst AG vertrieben wird.

Ebenfalls einsetzbar als Komponente B) sind Addukte, die durch Umsetzung eines Überschusses der genannten Polyamine mit Epoxydharzen der nachstehend genannten Art hergestellt werden.

Desweiteren sind auch Polyamidharze als Komponente B) geeignet. Derartige Polyamidharze, zu denen die Polyaminoamide und die Polyaminoimidazoline gehören, werden u.a. von Henkel unter dem Handelsnamen "Versamid®" vertrieben.

Weiterhin einsetzbar als Komponente B) sind Polyetheramine, die durch Umsetzung von Polyetherpolyolen mit Ammoniak hergestellt werden und beispielsweise von der Fa. Huntsman unter dem Handelsnamen Jeffamin® vertrieben werden.

Selbstverständlich ist es auch möglich Gemische der genannten Polyamine als Komponente B) einzusetzen.

Im allgemeinen liegen in den erfindungsgemäßen Reaktivsystemen die Komponenten A) und B) in solchen Mengen vor, die einem Äquivalentverhältnis von blockierten Isocyanatgruppen der Komponente A) zu primären und gegebenenfalls sekundären Aminogruppen der Komponente B) von 0,8:1 bis 1,2:1, vorzugsweise 0,9:1 bis 1,1:1 entsprechen.

Die erfindungsgemäßen Reaktivsysteme besitzen ein im Vergleich zum Stand der Technik außerordentlich günstiges Verhältnis von Lagerstabilität zu Einbrenntemperatur, was vom eingesetzten Katalysatorsystem abhängig ist. So können z.B. Gemische hergestellt werden, die unkatalisiert bei Raumtemperatur mehrere Tage verarbeitungsfähig sind, jedoch bei Temperaturerhöhung auf 120°C innerhalb von 20 Minuten aushärten. Es können auch Gemische durch Mitverwendung eines Katalysators so hergestellt werden, daß sie bei Raumtemperatur eine Verarbeitungszeit von 3 bis 4 Stunden besitzen und nach 24 Stunden durchgehärtet sind.

Als geeignete Katalysatoren eignen sich vorzugsweise Verbindungen, die basische Stickstoffatome aufweisen. Genannt seien beispielsweise tert.-Amine oder Mannichbasen. Besonders bevorzugt werden jedoch zur Katalyse Amidine eingesetzt. Besonders bevorzugte Katalysatoren sind beliebige gegebenenfalls substituierte Alkyl-, Aralkyl- oder Arylreste tragende Amidinbasen, wobei die CN-Doppelbindung der Amidinstruktur sowohl Teil eines offenkettigen Moleküls als auch Bestandteil eines cyclischen oder bicyclischen Systems oder auch exocyclisch an einem Ringsystem angeordnet sein kann, oder beliebige Mischungen solcher Amidine.

Geeignete Amidinkatalysatoren, in denen die CN-Doppelbindung als Teil eines offenkettigen Moleküls vorliegt, sind beispielsweise N,N-Dimethyl-N'-phenylformamidin oder N,N,N'-Trimethylformamidin, deren Herstellung z. B. in Chem. Ber. **98**, 1078 (1965) beschrieben ist. Als Beipiele für geeignete Amidine C), bei denen die CN-Doppelbindung Bestandteil eines cyclischen Systems ist, seien hier genannt: in 1-Stellung substituierte 2-Methyltetrahydropyrimidine, wie sie z. B. nach der Lehre der DE-A 2 439 550 durch Umsetzung von N-monosubstituierten 1,3-Propandiaminen mit Acetessigsäurederivaten erhalten werden können, oder monocyclische Amidinbasen, wie sie die gemäß DE-A 1 078 568 durch Reaktion von Carbamoylchloriden aus sek. Aminen mit Lactamen zugänglich sind. Geeignete Katalysatoren C), bei denen die CN-Doppelbindung exocyclisch an einem Ringsystem angeordnet ist sind beispielsweise Imine N-alkylsubstituierter Lactame, wie 2-Methylimino-1-methyl-pyrrolidon, dessen Herstellung z. B. in Chem. Ber. **101**, 3002 (1968) beschrieben ist.

Auch bicyclische Amidine wie sie z.B. in der EP-A 662 476 beschrieben werden, beispielsweise 1,5-Diazabicyclo[4.3.0]non-5-en (DBN) sind erfindungsgemäß einsetzbar.

Die erfindungsgemäßen Reaktivsysteme können gegebenfalls als Dreikomponentensysteme eingesetzt werden und enthalten dann als weitere Komponente C) Oxirangruppen-aufweisende Verbindungen. Geeignete Oxirangruppen-aufweisende Verbindungen sind Epoxidharze, die im Durchschnitt mehr als eine Epoxidgruppe pro Molekül enthalten. Beispiele für geeignete Epoxidharze sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan, Diphenylolmethan (Bisphenol F) oder Phenol-Aldehyd-Kondensaten. Es können auch Glycidylester mehrwertiger Carbonsäuren, wie Hexahydrophtalsäure oder dimerisierte Fettsäure verwendet werden.

Besonders bevorzugt ist der Einsatz von flüssigen Epoxidharzen auf Basis von Epichlorhydrin und Diphenylolpropan-2.2 (Bisphenol A) mit einem Molekulargewicht von 340 bis 450. Gewünschtenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In derartigen, erfindungsgemäßen Dreikomponenten-Reaktivsystemen liegen im allgemeinen pro Epoxidgruppe der Komponente C) 0,4 bis 0,9, vorzugsweise 0,5 bis 0,8 primäre Aminogruppen der Komponente B) und 0,02 bis 0,5, vorzugsweise 0,03 bis 0,4 blockierte Isocyanatgruppen der Komponente A) vor. Derartige Dreikomponenten-Reaktivsysteme werden im allgemeinen als Raumtemperatur-härtende Systeme eingesetzt.

Zur Herstellung von gebrauchsfertigen Mischungen können den Kombinationen der erfindungsgemäßen Komponenten A) , B) und C) die üblichen Hilfs- und Zusatzmittel wie beispielsweise Füllstoffe, Lösungsmittel, Verlaufshilfsmittel, Pigmente, Lösungsmittel, Reaktionsbeschleuniger oder Viskositätsregulatoren einverleibt werden. Beispielhaft genannt seien Reaktionsbeschleuniger wie Salicylsäure, Bis-(dimethylamino-methyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phtalsäureester oder andere Viskositätsreguatoren wie beispielsweise Benzylalkohol.

Die erfindungsgemäßen Reaktivsysteme eignen sich zur Herstellung von Beschichtungen, Klebstoffen, Dichtungsmassen, Verußmassen oder Formteilen auf allen Anwendungsgebieten, wo gute Haftung, Chemikalienfestigkeit, sowie hohe Schlag- und Stoßfestigkeit, verbunden mit guter Flexibilität und Elastizität gefordert werden. Werden besonders weiche und elastische Materialien gefordert, enthalten die Reaktivsysteme vorzugsweise keine Komponente C. Werden hoch vernetzte, chemikalienbeständige Materialien gefordert, so enthalten die Reaktivsysteme nur einen geringen Anteil an Komponente A), der zur Elastifizierung des Epoxidharzes C verhilft.

### Beispiele

Alle Prozentangaben in den Beispielen beziehen sich, soweit nicht anders vermerkt, auf das Gewicht.

### Beispiel 1

1 330 g eines Polyetherpolyols der OH-Zahl 42, hergestellt durch gleichzeitige Ethoxylierung und Propoxylierung (EO/PO-Verhältnis = 2:8) eines 1:2 Gemisches von Propylenglykol und Glycerin, werden mit 174 g 2,4-Diisocyanatotoluol 5 Stunden bei 80°C prepolymerisiert, bis der theoretische NCO-Gehalt von 2,8 % erreicht ist.

Anschließend setzt man 800 g eines handelsüblichen Kohlenwasserstoffharzes mit einem Hydroxylgruppengehalt von 2,25 % (Novares LA 700, Handelsprodukt der Fa. VFT AG, Duisburg) zu, katalysiert mit 0,2 g Zinn(II)octoat und rührt 10 Stunden bei 60°C. Nach dieser Zeit ist im IR-Spektrum kein freies Isocyanat mehr nachweisbar. Das erhaltene blockierte Isocyanatprepolymer besitzt folgende Kenndaten:

| blockierter NCO-Gehalt | 1,8% |
|---|---|
| Viskosität (23°C) | 62 000 mPas |

233 g des Prepolymers werden mit 11,9 g 3,3'-Dimethyl-4,4'-diaminodicyclohexylmethan innig verrührt. Die Mischung hat eine Verarbeitungszeit von 48 Stunden. Die Mischung wird in einer Schichtdicke von 3 mm ausgegossen und durch 20-minütiges Erwärmen auf 120°C ausgehärtet. Dabei erhält man einen klaren elastischen Kunststoff mit folgenden mechanischen Eigenschaften:

| Shore A-Härte | 52 |
|---|---|
| Reißdehnung | 450 % |
| Reißfestigkeit | 4,1 N/mm$^2$ |
| Weiterreißwiderstand | 14 N/mm |

## Beispiel 2

Das NCO-Prepolymer wird wie in Beispiel 1 beschrieben hergestellt. Die Blockierungsreaktion wird in analoger Weise durchgeführt, jedoch werden 940 g eines anderen handelsüblichen Kohlenwasserstoffharzes mit einem Hydroxylgruppengehalt von 1,9 % eingesetzt (Novares LA 300®, Handelsprodukt der Fa. VFT AG, Duisburg). Das erhaltene blockierte Isocyanatprepolymer besitzt folgende Kenndaten:

| blockierter NCO-Gehalt | 1,7% |
|---|---|
| Viskosität (23°C) | 35 000 mPas |

247 g des Prepolymers werden mit 11,9 g 3,3'-Dimethyl-4,4'-diaminodicyclohexylmethan und 2,5 g 1,8-Diazabicyclo[5.4.0]undec-7-en (DBU) innig verrührt. Die Mischung wird in einer Schichtdicke von 3 mm ausgegossen und härtet bei Raumtemperatur innerhalb von 6 Stunden. Der erhaltene klare, elastische Kunststoff besitzt die folgenden mechanischen Eigenschaften:

| Shore A-Härte | 47 |
|---|---|
| Reißdehnung | 490 % |
| Reißfestigkeit | 3,7 N/mm$^2$ |
| Weiterreißwiderstand | 10 N/mm |

## Beispiel 3

425 g eines Polyesterdiols der OH-Zahl 66, hergestellt durch Veresterung von Hexandiol-1,6 und Neopentylglykol im Molverhältnis 1:1 mit Adipinsäure, und 500 g eines Polyetherdiols hergestellt durch Propoxylierung von Propylenglykol, OH-Zahl 56 und 4,5 g Trimethylolpropan werden mit 174 g eines technischen 80:20 Gemisches von 2,4- Diisocyanatotoluol und 2,6-Diisocyanatotoluol bei 70°C prepolymerisiert, bis der theoretische NCO-Gehalt von 3,1 % erreicht ist.

Anschließend setzt man 440 g eines handelsüblichen Kohlenwasserstoffharzes mit einem Hydroxylgruppengehalt von 3,9 % (Necirès EPX-LC®, Handelsprodukt der Fa. Nevcin Polymers B.V., Uithoorn, Holland) zu, katalysiert mit 0,2 g Zinn(II)octoat und rührt 10 Stunden bei 60°C. Nach dieser Zeit ist im IR-Spektrum kein freies Isocyanat mehr nachweisbar. Das erhaltene blockierte Isocyanatprepolymer wird 95 %ig in Methoxypropylacetat gelöst und besitzt dann folgende Kenndaten:

| blockierter NCO-Gehalt | 2,35 % |
|---|---|
| Viskosität (23°C) | 42 000 mPas |

179 g des Prepolymers werden mit 11,9 g 3,3'-Dimethyl-4,4'-diaminodicyclohexylmethan innig verrührt. Die Mischung hat eine Verarbeitungszeit von 48 Stunden. Die Mischung wird in einer Schichtdicke von 0,2 mm auf eine Glasplatte aufgebracht und durch 20-minütiges Erwärmen auf 120°C ausgehärtet. Dabei erhält man einen klaren hochelastischen Polymerfilm mit folgenden Eigenschaften:

| Reißdehnung | 490 % |
|---|---|
| 100% Modul | 4,9N/mm$^2$ |
| Reißfestigkeit | 13,9 N/mm$^2$ |
| Weiterreißwiderstand | 72 N/mm |

## Beispiel 4

3 000 g eines Polyetherpolyols der OH-Zahl 48, hergestellt durch Propoxylierung von Trimethylolpropan, werden mit 1 400 g 2,4-Diisocyanatotoluol 5 Stunden unter Rühren auf 70°C erhitzt. Anschließend wird der Überschuß an Diisocyanat durch Vakuum-Dünnschichtdestillation bei 140°C/0,2 mbar entfernt. Es entsteht ein Isocyanatendgruppen aufweisendes Prepolymer mit einem NCO-Gehalt von 3,2 %.

Zu 1 310 g dieses Prepolymers werden 800 g eines handelsüblichen Kohlenwasserstoffharzes mit einem Hydroxylgruppengehalt von 2,25 % (Novares LA 700®, Handeisprodukt der Fa. VFT AG, Duisburg) und 0,2 g Zinn(II)octoat zugegeben. Man rührt 10 Stunden bei 60°C. Nach dieser Zeit ist im IR-Spektrum kein freies Isocyanat mehr nachweisbar. Das erhaltene blockierte Isocyanatprepolymer besitzt folgende Kenndaten:

| blockierter NCO-Gehalt | 2,0 % |
|---|---|
| Viskosität (23°C) | 76 000 mPas |

210 g des Prepolmers werden mit 8,5 g Isophorondiamin innig verrührt. Die Mischung wird in einer Schichtdicke von 3 mm ausgegossen und durch 20-minütiges Erwärmen auf 120°C ausgehärtet. Dabei erhält man einen klaren elastische Kunststoff mit folgenden mechanischen Eigenschaften:

| Shore A-Härte | 32 |
|---|---|
| Reißdehnung | 630 % |
| Reißfestigkeit | 2,1 N/mm$^2$ |
| Weiterreißwiderstand | 5,0 N/mm |

### Beispiel 5

75 g des Prepolymers aus Beispiel 2 werden mit 25 g eines Standard-Epoxydharzes (Epikote 828®, Handelsprodukt der Fa. Shell, Epoxydäquivalentgewicht 190) und 8,5 g Isophorondiamin vermischt. Die Mischung härtet über Nacht bei Raumtemperatur. Der erhaltene, leicht opake, zähelastische Kunststoff hat eine Shore A-Härte von 84 und eine Shore D-Härte von 27.

### Beispiel 6

50 g des Prepolymers aus Beispiel 2 werden mit 50 g eines Standard-Epoxydharzes (Epikote 828®, Handelsprodukt der Fa. Shell, Epoxydäquivalentgewicht 190) und 13 g Isophorondiamin vermischt. Die Mischung härtet über Nacht bei Raumtemperatur. Der erhaltene, opake, schlagzähe Kunststoff hat eine Shore D-Härte von 72.

### Beispiel 7

25 g des Prepolymers aus Beispiel 2 werden mit 75 g eines Standard-Epoxydharzes (Epikote 828®, Handelsprodukt der Fa. Shell, Epoxydäquivalentgewicht 190) und 55 g Isophorondiamin vermischt. Die Mischung härtet innerhalb von 5 Stunden bei Raumtemperatur. Der erhaltene opake, spröde Kunststoff hat eine Shore D-Härte von 80.

### Beispiel 8

50 g des Prepolymers aus Beispiel 2 werden mit 3,2 g eines handelsüblichen Polyamin-Addukt-Härters auf Basis Isophorondiamin/Epoxidharz mit einem Aminwert von 6,5 Eq/kg (Härter HY 847, Handelsprodukt der Fa. Ciba Specialty Chemicals) vermischt. Die Mischung wird durch 6-stündiges Erhitzen auf 60°C ausgehärtet. Dabei erhält man einen transparenten hochelastischen Kunststoff einer Shore A-Härte von 20.

### Beispiel 9

1 330 g des Polyetherpolyols aus Beispiel 1 werden mit 222 g Isophorondiisocyanat 20 Stunden bei 100°C prepolymerisiert, bis der theoretische NCO-Gehalt von 2,8 % erreicht ist. Anschließend setzt man 940 g des handelsüblichen Kohlenwasserstoffharzes aus Beispiel 2 zu, katalysiert mit 0,4 g Zinn(II)octoat und rührt 10 Stunden bei 80°C. Nach dieser Zeit ist im IR-Spektrum kein freies Isocyanat mehr nachweisbar. Das erhaltene blockierte Isocyanatprepolymer besitzt folgende Kenndaten:

| blockierter NCO-Gehalt | 1,7% |
|---|---|
| Viskosität (23°C) | 55 000 mPas |

247 g des Prepolymers werden mit 11,9 g 3,3'-Dimethyl-4,4'-diaminodicyclohexylmethan innig verrührt. Die Mischung wird in einer Schichtdicke von 3 mm ausgegossen und durch 90-minütiges Erwärmen auf 120°C ausgehärtet. Dabei erhält man einen transparenten, hochelastischen Kunststoff einer Shore A-Härte von 22.

| Shore A-Härte | 52 |
|---|---|
| Reißdehnung | 450 % |
| Reißfestigkeit | 4,1 N/mm$^2$ |
| Weiterreißwiderstand | 14 N/mm |

### Beispiel 10

425 g des Polyesterdiols aus Beispiel 3, 500 g des Polyetherdiols aus Beispiel 3 und 4,5 g Trimethylolpropan werden mit 222 g Isophorondiisocyanat bei 100°C prepolymerisiert, bis der theoretische NCO-Gehalt von 3,3 % erreicht ist.

Anschließend setzt man 940 g des handelsüblichen Kohlenwasserstoffharzes aus Beispiel 2 zu, katalysiert mit 0,4 g Zinn(II)octoat und rührt 10 Stunden bei 80°C. Nach dieser Zeit ist im IR-Spektrum kein freies Isocyanat mehr nachweisbar. Das erhaltene blockierte Isocyanatprepolymer wird 95 %ig in Methoxypropylacetat gelöst und besitzt dann folgende Kenndaten:

| blockierter NCO-Gehalt | 1,7% |
|---|---|
| Viskosität (23°C) | 35 000 mPas |

247 g des Prepolymers werden mit 10,5 g 4,4'-Diaminodicyclohexylmethan innig verrührt. Die Mischung wird in einer Schichtdicke von 3mm ausgegossen und durch 90-minütiges Erwärmen auf 120°C ausgehärtet. Dabei erhält man einen transparenten, hochelastischen Kunststoff einer Shore A-Härte von 18.

### Beispiel 11

Nicht erfindungsgemäßes Vergleichsbeispiel im Hinblick auf DE-A 2 152 606

Zu 1 504 g des NCO-Prepolymers aus Beispiel 1 werden 245 g eines technischen Nonylphenol-Isomerengemisches gegeben. Nach Katalyse mit 0,2 g Zinn(II)octoat wird 10 Stunden bei 60°C nachgerührt. Nach dieser Zeit ist im IR-Spektrum kein freies Isocyanat mehr nachweisbar. Das erhaltene blockierte Isocyanatprepolymer besitzt folgende Kenndaten:

| blockierter NCO-Gehalt | 2,4 % |
| Viskosität | 98 000 mP·s (23°C) |

175 g des Prepolymers werden mit 11,9 g 3,3'-Dimethyl-4,4'-diaminodicyclohexylmethan innig verrührt. Die Mischung hat eine Verarbeitungszeit von nur 6 Stunden. Nach vollständiger Aushärtung erhält man einen klaren elastischen Kunststoff mit folgenden mechanischen Eigenschaften:

| Shore A-Härte | 59 |
| Reißdehnung | 260 % |
| Reißfestigkeit | 3,9N/mm$^2$ |
| Weiterreißwiderstand | 11 N/mm |

**Patentansprüche**

1. Reaktivsysteme bestehend aus

   A) einer Polyisocyanatkomponente, bestehend aus mindestens einem organischen Polyisocyanat mit reversibel blockierten Isocyanatgruppen,

   B) mindestens einem organischen Polyamin mit mindestens zwei primären Aminogruppen,

   sowie gegebenenfalls

   C) Oxirangruppen aufweisenden Verbindungen,

   **dadurch gekennzeichnet, daß** die Komponente A) aus mindestens einem Polyisocyanat des Molekulargewichtsbereichs (ohne Einbeziehung des Blockierungsmittels) 168 bis 25 000 besteht, dessen Isocyanatgruppen durch Reaktion mit mindestens einem phenolische OH-Gruppen aufweisenden Kohlenwasserstofharz reversibel blockiert sind.

2. Reaktivsysteme gemäß Anspruch 1, **dadurch gekennzeichnet, daß** die Komponente A) aus mindestens einem Isocyanatgruppen aufweisenden Prepolymeren auf Basis von (i) aromatische Polyisocyanaten des Molekulargewichtsbereichs 174 bis 300 und (ii) Ether- und/oder Estergruppen aufweisenden organischen Polyhydroxylverbindungen des Molekulargewichtsbereichs 1 000 bis 8 000 besteht, dessen Isocyanatgruppen durch Reaktion mit mindestens einem phenolische OH-Gruppen auf-weisenden Kohlenwasserstoffharz reversibel blokkiert sind.

3. Reaktivsysteme gemäß Anspruch 1 und 2, **dadurch gekennzeichnet, daß** die Isocyanatgruppen der Komponente A) durch Reaktion mit einem bei Raumtemperatur flüssigen, phenolische OH-Gruppen aufweisenden Kohlenwasserstoffharz mit einem Hydroxylgruppengehalt von 1,5 % bis 4,0 % reversibel blockiert sind.

4. Reaktivsysteme gemäß Anspruch 1, **dadurch gekennzeichnet, daß** es sich bei der Komponente B) um mindestens ein Diamin mit mindestens einem cycloaliphatischen Ring mit einem maximalen Molekulargewicht von 500 handelt.

5. Reaktivsysteme gemäß Anspruch 1, **dadurch gekennzeichnet, daß** es sich bei der Komponente C) um flüssige Epoxidharze auf Basis von Epichlorhydrin und Diphenylolpropan-2.2 (Bisphenol A) mit einem Molekulargewicht von 340 bis 450 handelt.

6. Verwendung der Reaktivsysteme gemäß Anspruch 1 bis 5, gegebenenfalls in Kombination mit den in der Kunststoff- und Beschichtungstechnologie üblichen Katalysatoren, Hilfs- und Zusatzstoffen zur Herstellung von Beschichtungen, Klebstoffen, Dichtungsmassen, Vergußmassen oder Formteilen.

**Claims**

1. Reactive systems consisting of

   A) a polyisocyanate component, consisting of at least one organic polyisocyanate with reversibly blocked isocyanate groups,

   B) at least one organic polyamine with at least two primary amino groups,

   and optionally

   C) compounds which contain oxiran groups,

   **characterised in that** component A) consists of at least one polyisocyanate with a molecular weight (without including the blocking agent) in the range 168 to 25 000, in which the isocyanate groups are reversibly blocked by reaction with at least one hydrocarbon resin containing phenolic OH groups.

2. Reactive systems in accordance with Claim 1, **characterised in that** component A) consists of at least one prepolymer which contains isocyanate groups and is based on (i) aromatic polyisocyanates with a molecular weight in the range 174 to 300 and (ii) polyhydroxyl compounds which contain ether and/or ester groups and have a molecular weight in the range 1000 to 8000, in which the isocyanate groups are reversibly blocked by reaction with at least one hydrocarbon resin containing phenolic OH groups.

3. Reactive systems in accordance with Claim 1 and 2, **characterised in that** the isocyanate groups in component A) are reversibly blocked by reaction with a hydrocarbon resin which contains phenolic OH groups, is liquid at room temperature and has a hydroxyl group content of 1.5 % to 4.0 %.

4. Reactive systems in accordance with Claim 1, **characterised in that** component B) is at least one diamine containing at least one cycloaliphatic ring and with a maximum molecular weight of 500.

5. Reactive systems according to Claim 1, **characterised in that** component C) is a liquid epoxide resin based on epichlorohydrin and diphenylolpropane-2,2 (bisphenol A) with a molecular weight of 340 to 450.

6. Use of the reactive systems in accordance with Claims 1 to 5, optionally combined with catalysts, auxiliary substances and additives conventionally used in plastics and coating technology, for producing coatings, adhesives, sealing compounds, embedding compounds or moulded items.

**Revendications**

1. Systèmes réactifs se composant de

   A) un composant polyisocyanate, se composant d'au moins un polyisocyanate organique avec des groupes isocyanate bloqués de façon réversible,

   B) au moins une polyamine organique avec au moins deux groupes amine primaires,

   ainsi qu'éventuellement

   C) des composés présentant des groupes oxirane,

   **caractérisés en ce que** le composant A) est composé d'au moins un polyisocyanate dans la gamme des poids moléculaires (sans tenir compte du moyen de blocage) de 168 à 25000, dont les groupes isocyanate sont bloqués de façon réversible par réaction avec au moins une résine hydrocarbonée présentant des groupes OH phénoliques.

2. Systèmes réactifs selon la revendication 1, **caractérisés en ce que** le composant A) est composé d'au moins un prépolymère présentant des groupes isocyanate, à base (i) de polyisocyanates aromatiques dans la gamme des poids moléculaires de 174 à 300 et (ii) de composés polyhydroxylés organiques dans la gamme des poids moléculaires de 1000 à 8000 présentant des groupes éther et/ou ester, dont les groupes isocyanate sont bloqués de façon réversible par réaction avec au moins une résine hydrocarbonée présentant des groupes OH phénoliques.

3. Systèmes réactifs selon la revendication 1 et 2, **caractérisés en ce que** les groupes isocyanate du composant A) sont bloqués de façon réversible par réaction avec une résine hydrocarbonée ayant une teneur en groupes hydroxyle de 1,5 % à 4,0 %, présentant des groupes OH phénoliques et liquide à la température ambiante.

4. Systèmes réactifs selon la revendication 1, **caractérisés en ce qu'**il s'agit pour le composant B) d'au moins une diamine avec au moins un anneau cycloaliphatique avec un poids moléculaire maximal de 500.

5. Systèmes réactifs selon la revendication 1, **caractérisés en ce qu'**il s'agit pour le composant C) de résines époxy liquides à base d'épichlorhydrine et de diphénylolpropane-2,2 (bisphénol A) avec un poids moléculaire de 340 à 450.

6. Utilisation des systèmes réactifs selon les revendications 1 à 5, éventuellement en combinaison avec les catalyseurs, les adjuvants et les substances d'addition usuels dans la technologie des matières plastiques et des revêtements, pour la production de revêtements, d'adhésifs, de matériaux d'étanchéité, de matériaux de coulée ou de pièces moulées.